# EUROPEAN PATENT APPLICATION

(11) **EP 4 083 943 A1**
(43) Date of publication of application: **02.11.2022**
(21) Application number: 22164920.5
(22) Date of filing: 29.03.2022
(51) Int. Cl.: G06V 20/56

(54) **METHOD AND APPARATUS FOR DETECTING LANE LINES, ELECTRONIC DEVICE AND STORAGE MEDIUM**

(30) Priority: 01.04.2021 CN 202110358313
(71) Applicant: Beijing Tusen Zhitu Technology Co., Ltd., Beijing 100016 (CN)
(72) Inventor: SHEN, Zhenwei, Beijing, 100016 (CN); HUANG, Zehao, Beijing, 100016 (CN); WANG, Naiyan, Beijing, 100016 (CN)
(74) Representative: Murgitroyd & Company

(57) **Abstract**

The present application relates to a method and an apparatus for detecting lane lines, an electronic device and a storage medium. The method comprises: acquiring an image to be detected; determining at least one initial point in the image; extracting a position characteristic of at least one initial point; processing the position characteristic of the at least one initial point by using a first network model to obtain trend information of a corresponding lane line; and generating a target lane line containing the at least one initial point according to the trend information. In the present application, a network model is used to process a position characteristic of an initial point to obtain trend information of the lane line, and a complete lane line of the road image is quickly generated according to the trend information.

## Description

### TECHNICAL FIELD

The present application belongs to the technical field of autonomous driving, and in particular to a method and an apparatus for detecting lane lines, an electronic device and a storage medium.

### BACKGROUND

With the development of vehicles, more and more artificial intelligence technologies are applied to autonomous driving technology, and lane line detection is an important link in the autonomous driving technology. However, in a road image collected by a sensor, a cover may exist in an extending direction of a lane line, so that the lane line may be covered, and it is impossible to determine whether a lane line is under the cover. Therefore, a position of the covered lane line needs to be estimated to obtain a complete lane line.

At present, detection for lane lines that are covered mostly involves processing of a plurality of images or requires prediction with reference to a depth map and a camera pose. The processing of the plurality of images results in relatively low instantaneity due to a large data volume and long processing time. Referring to the depth map and the camera pose increases the computational complexity and the cost as it needs to depend on the depth map and the camera pose.

### SUMMARY

In view of this, the present application aims to provide a method and an apparatus for detecting lane lines, an electronic device and a storage medium, so as to solve the problem that existing lane line detection cannot quickly and accurately detect lane lines.

The embodiments of the present application are realized as follows:

In a first aspect, an embodiment of the present application provides a method for detecting lane lines, which comprises: acquiring an image to be detected; determining a set of initial points in the image, the set of initial points being on a lane line of the image; extracting a position characteristic of at least one point in the set of initial points; processing the position characteristic of the at least one point by using a pre-trained first network model to obtain trend information of a corresponding lane line; and generating a target lane line containing the set of initial points according to the trend information.

In the embodiment of the present application, by means of acquiring the set of initial points on the lane line in the image, extracting the position characteristic of at least one point in the set of initial points, processing the extracted position characteristic of the at least one point by using the pre-trained first network model to obtain trend information of the corresponding lane line, and generating the target lane line containing the set of initial points according to the trend information, a complete lane line can be quickly detected by predicting trend information of a lane, so that the problem that a complete lane line cannot be quickly and accurately detected in the existing method for detecting lane lines when the lane line is covered.

In a possible implementation with reference to the embodiment of the first aspect, each lane line is represented by points longitudinally spaced apart from each other by a predetermined distance, and the position characteristic of each point comprises position coordinates and an offset characteristic of the point, wherein the offset characteristic is a high-dimensional vector representing a position relation from the point to a next point, and is extracted from an intermediate layer of a pre-trained second network model according to the position coordinates of each point.

In a possible implementation with reference to the embodiment of the first aspect, when the first network model processes the position characteristic of each point, an input of the first network model is the position coordinates and the offset characteristic of the current point and trend information learned last time by the first network model, and an output of the first network model is the coordinate offset from the current point to the next point and trend information learned this time.

In a possible implementation with reference to the embodiment of the first aspect, the trend information is a high-dimensional vector, and the trend information input into the first network model during a first prediction is a preset initial value.

In a possible implementation with reference to the embodiment of the first aspect, the processing the position characteristic of the at least one point by using a pre-trained first network model to obtain trend information of a corresponding lane line and generating a target lane line containing the set of initial points according to the trend information comprises: processing, by using the first network model, the position coordinates and offset characteristic of the current point and the trend information learned last time by the first network model, and outputting a coordinate offset from the current point to a next point and trend information learned this time; determining position coordinates of the next point according to the coordinate offset and the position coordinates of the current point; outputting offset coordinates from the next point to a further next point and latest trend information by taking the offset characteristic and position coordinates of the next point and the trend information learned this time by the first network model as model input, and so on, till a preset stop position is reached.

In a possible implementation with reference to the embodiment of the first aspect, the determining position coordinates of the next point according to the coordinate offset and the position coordinates of the current point comprises: correcting the position coordinates of the next point in response to the next point being at a same height as a certain point in the set of initial points and a horizontal distance between the next point and the certain point that is at the same height as the next point being less than or equal to a predetermined pixel.

In a possible implementation with reference to the embodiment of the first aspect, the first network model is a recurrent neural network model in which parameters are shared at each step, and the position coordinates input into the first network model are normalized coordinates.

In a possible implementation with reference to the embodiment of the first aspect, the image is divided into squares of m^{∗}n, and the coordinate offset from the current point to the next point is a coordinate offset from a center point of the square in which the current point is located to a midpoint of the lane line in a next row.

In a possible implementation with reference to the embodiment of the first aspect, the first network model comprises a first network branch and a second network branch; the first network branch is configured for predicting trend information of a corresponding lane line from a first direction, and the second network branch is configured for predicting trend information of the corresponding lane line from a second direction, wherein the first direction is opposite to the second direction.

In a possible implementation with reference to the embodiment of the first aspect, the target lane line comprises a lane line whose two end points reach critical lines of the image, respectively; the preset stop position includes a position where a preset number of iterations are achieved, or a position at critical lines of the image; and the critical lines of the image comprise at least one of an upper critical line, a lower critical line, a left critical line, and a right critical line.

In a possible implementation with reference to the embodiment of the first aspect, the processing the position characteristic of the at least one point by using a pre-trained first network model to obtain trend information of a corresponding lane line and generating a target lane line containing the set of initial points according to the trend information comprises: processing the position characteristic of the at least one point by using a pre-trained first network model to obtain trend information of a corresponding lane line along a first direction, and generating, according to the trend information along the first direction, a plurality of points till a preset stop position in the first direction is reached; and from the preset stop position in the first direction, predicting trend information of the corresponding lane line along a second direction by using the first network model, and generating, according to the trend information along the second direction, a plurality of points till a preset stop position in the second direction is reached, wherein the first direction is opposite to the second direction.

In a possible implementation with reference to the embodiment of the first aspect, the processing the position characteristic of the at least one point by using a pre-trained first network model to obtain trend information of a corresponding lane line comprises: processing the position characteristic of at least one point of the set of initial points in a first direction by using the pre-trained first network model to obtain trend information of a corresponding lane line along the first direction; and processing the position characteristic of at least one point of the set of initial points in a second direction by using the pre-trained first network model to obtain trend information of the corresponding lane line along the second direction, wherein the first direction is opposite to the second direction.

In a possible implementation with reference to the embodiment of the first aspect, the method further comprises: acquiring a coordinate sequence of a plurality of lane lines; extracting coordinate offsets and offset characteristics from each point to a next point in each lane line to generate a first training set; and training an initial first network model by using the first training set to obtain a trained model.

In a possible implementation with reference to the embodiment of the first aspect, the method further comprises: acquiring a second training set, wherein training images in the second training set are marked with a plurality of lane lines and coordinate offsets from each point to a next point in each lane line; and training an initial second network model by using the second training set to obtain a trained model.

In a possible implementation with reference to the embodiment of the first aspect, the set of initial points comprise a plurality of points, the plurality of points are located on a same lane line, or the plurality of points are distributed on a plurality of lane lines.

In a second aspect, an embodiment of the present application further provides an apparatus for detecting lane lines, which comprises an acquisition module and a processing module, wherein the acquisition module is configured to acquire an image comprising lane lines, and the processing module is configured to: determine a set of initial points in the image, the set of initial points being on a lane line of the image; extract a position characteristic of at least one point in the set of initial points; process the position characteristic of the at least one point by using a pre-trained first network model to obtain trend information of a corresponding lane line; and generate a target lane line containing the set of initial points according to the trend information.

In a third aspect, an embodiment of the present application further provides an electronic device comprising a memory and a processor, wherein the processor is connected to the memory, the memory is configured to store programs, and the processor is configured to call the programs stored in the memory to perform the method provided by the embodiment of the first aspect described above and/or provided in any one possible implementation with reference to the embodiment of the first aspect.

In a fourth aspect, an embodiment of the present application further provides a storage medium having a computer program stored thereon, wherein the computer program, when executed by a processor, performs the method provided by the embodiment of the first aspect described above and/or provided in any one possible implementation with reference to the embodiment of the first aspect.

Additional features and advantages of the present application will be described in the following specification, and partially will be obvious from the specification, or may be comprehended by embodiments of the present application. The objectives and other advantages of the present application may be realized and attained by the structure particularly pointed out in the written specification and drawings.

### BRIEF DESCRIPTION OF THE DRAWINGS

In order to more clearly illustrate embodiments of the present application or the technical schemes in the prior art, the drawings required for use in the embodiments will be briefly described below. It is obvious that the drawings in the description below are only some embodiments of the present application, and other drawings can be derived from these drawings by those of ordinary skills in the art without making creative efforts. The above-described and other objectives, features and advantages of the present application will be more apparent from the drawings. Identical reference numerals refer to the identical parts throughout all the drawings. The drawings are not deliberately proportionally scaled relative to the actual size, and the main point is to illustrate the main idea of the present application.
FIG. 1 is a schematic diagram of the architecture of a vehicle provided in an embodiment of the present application;
FIG. 2 is a schematic flowchart of the method for detecting lane lines provided in an embodiment of the present application;
FIG. 3 is a schematic diagram showing the principle of completing a lane line provided in an embodiment of the present application;
FIG. 4 is a schematic diagram of a road image provided in an embodiment of the present application;
FIG. 5 is a schematic diagram of an initial lane line identified from a road image provided in an embodiment of the present application;
FIG. 6 is a schematic diagram of a generated target lane line provided in an embodiment of the present application;
FIG. 7 is a block diagram of modules of the apparatus for detecting lane lines provided in an embodiment of the present application; and
FIG. 8 is a schematic diagram of the structure of an electronic device provided in an embodiment of the present application.

### DETAILED DESCRIPTION

The technical schemes in embodiments of the present application will be described below with reference to the drawings in the embodiments of the present application.

It should be noted that similar reference numbers and letters refer to similar terms in the following drawings, and thus, once a term is defined in one drawing, it is unnecessary to be further defined or explained in subsequent drawings. Meanwhile, relational terms such as "first" and "second" in the description of the present application may be used merely to distinguish an entity or operation from another entity or operation without necessarily requiring or implying that there is any such actual relationship or order between these entities or operations. Also, the terms "include", "including" "comprises", "comprising", or any other variation thereof are intended to cover a non-exclusive inclusion, such that a process, method, article, or device that comprises a list of elements include not only those elements but also other elements not expressly listed or elements inherent to such process, method, article, or device. An element defined by the phrase "comprising a ..." does not, without more constraints, preclude the existence of additional identical elements in the process, method, article, or device that comprises the element.

Furthermore, the term "and/or" in the present application is merely an associative relationship describing the associated objects, and means that there may be three relationships. For example, A and/or B could mean: there is A alone, there are both A and B, and there is B alone.

In view of the problem that an existing method for detecting lane lines cannot accurately and quickly detect a complete lane line, an embodiment of the present application provides a method for detecting lane lines, in which a set of initial points located on a lane line in a road image are predicted by using a neural network model, a position characteristic of at least one point in the set of initial points is extracted and then processed by using a pre-trained first network model to obtain trend information of a corresponding lane line, and a target lane line containing the set of initial points can be quickly generated according to the trend information, and thus the problem that the existing method for detecting lane lines cannot accurately and quickly detect a complete lane line is solved.

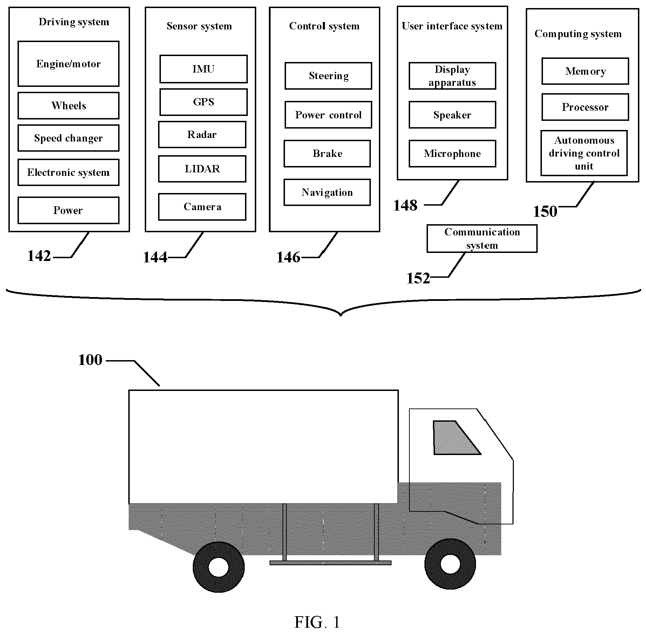

The method for detecting lane lines provided in the embodiment of the present application can be applied to a vehicle, and the vehicle related to the present application will be described below with reference to FIG. 1. FIG. 1 is a schematic diagram of a vehicle 100 in which various techniques disclosed herein are implemented. The vehicle 100 may be a car, a truck, a motorcycle, a bus, a watercraft, an airplane, a helicopter, a hay mower, an excavator, a snowmobile, an aircraft, a recreational vehicle, an amusement park vehicle, a farm equipment, a construction equipment, a tram, a golf cart, a train, a trolley bus or other vehicles. The vehicle 100 can be operated fully or partially in an autonomous driving mode. The vehicle 100 can control itself in the autonomous driving mode. For example, the vehicle 100 can determine a current state of the vehicle and a current state of an environment in which the vehicle is located, determine a predicted behavior of at least one other vehicle in this environment, and determine a trust level corresponding to a likelihood that the at least one other vehicle performs the predicted behavior, and thus the vehicle 100 can control itself based on these determined information. The vehicle 100, when in the autonomous driving mode, can be operated without human interaction.

The vehicle 100 may comprise various vehicle systems, such as a driving system 142, a sensor system 144, a control system 146, a user interface system 148, a computing system 150 and a communication system 152. The vehicle 100 may comprise more or fewer systems, each of which may comprise a plurality of units. Further, each system and unit of the vehicle 100 can be interconnected. For example, the computing system 150 can be in data communication with one or more of the driving system 142, the sensor system 144, the control system 146, the user interface system 148 and the communication system 152. Thus, one or more of the described functions of the vehicle 100 may be divided into additional functional or physical components or combined into a fewer number of functional or physical components. In a still further example, additional functional or physical components may be added to the example shown in FIG. 1. The driving system 142 may comprise a plurality of operable components (or units) that provide kinetic energy for the vehicle 100. In one embodiment, the driving system 142 may comprise an engine or a motor, wheels, a speed changer, an electronic system, and power (or a source of power). The engine or motor may be any combination of the following apparatuses: an internal combustion engine, an electrical machine, a steam engine, a fuel cell engine, a propane engine or other forms of engines or motors. In some embodiments, the engine may convert a source of power into mechanical energy. In some embodiments, the driving system 142 may comprise a variety of engines or motors. For example, a hybrid electric vehicle may comprise a gasoline engine and a motor, and may also comprise other combinations.

The wheels of the vehicle 100 may be standard wheels. The wheels of the vehicle 100 may be in a variety of forms including single wheel, dual wheel, three wheel or four wheel forms, such as four wheels on a car or a truck. Other numbers of wheels are possible, such as six or more wheels. One or more wheels of the vehicle 100 may be operated to rotate in a direction different from the other wheels. The wheel may be at least one wheel fixedly connected with the speed changer. The wheel may comprise a combination of metal and rubber or a combination of other substances. The speed changer may comprise a unit operable to transmit mechanical power of the engine to the wheels. For this purpose, the speed changer may comprise a gearbox, a clutch, a differential gear and a propeller shaft. The speed changer may also comprise other units. The propeller shaft may comprise one or more axles that mate with the wheels. The electronic system may comprise a unit for transmitting or controlling electronic signals of the vehicle 100. These electronic signals can be used to activate a plurality of lights, servos, motors and other electronically driven or controlled apparatuses in the vehicle 100. The source of power may be an energy source that wholly or partially powers an engine or a motor. That is, the engine or the motor can convert the source of power into mechanical energy. For example, the source of power may include gasoline, petroleum, petroleum-based fuels, propane, other compressed gas fuels, ethanol, fuel cells, solar panels, batteries and other sources of electrical energy. The source of power may additionally or optionally comprise any combination of a fuel tank, a battery, a capacitor or a flywheel. The source of power may also provide power to other systems of the vehicle 100.

The sensor system 144 may comprise a plurality of sensors for sensing information about the environment and conditions of the vehicle 100. For example, the sensor system 144 may comprise an Inertial Measurement Unit (IMU), a GNSS (Global Navigation Satellite System) transceiver (e.g., a Global Positioning System (GPS) transceiver), a radar (RADAR), a laser rangefinder/LIDAR (or other distance measurement apparatuses), an acoustic sensor, an ultrasonic sensor and a camera or an image capture apparatus. The sensor system 144 may comprise a plurality of sensors (e.g., oxygen (O₂) monitors, fuel gauge sensors, engine oil pressure sensors, temperature sensors, humidity sensors, and pressure sensors) configured for monitoring the vehicle 100. Other sensors may also be configured. One or more sensors comprised in the sensor system 144 can be driven independently or collectively to update the position, orientation, or both of the one or more sensors.

The IMU may comprise a combination of sensors (e.g., an accelerometer and a gyroscope) for sensing position and direction changes of the vehicle 100 based on inertial acceleration. The GPS transceiver may be any sensor for estimating the geographic location of the vehicle 100. For this purpose, the GPS transceiver may comprise a receiver/a transmitter to provide positional information of the vehicle 100 relative to the earth. It should be noted that GPS is an example of a global navigation satellite system, and therefore, in some embodiments, the GPS transceiver may be replaced with a BeiDou satellite navigation system transceiver or a Galileo satellite navigation system transceiver. The radar unit may use radio signals to sense an object in the environment in which the vehicle 100 is located. In some embodiments, in addition to sensing the object, the radar unit may also be used to sense the velocity and heading of an object approaching the vehicle 100. The laser rangefinder or LIDAR unit (or other distance measurement apparatuses) may be any sensor that uses laser light to sense an object in the environment in which the vehicle 100 is located. In one embodiment, the laser rangefinder/LIDAR unit may comprise a laser source, a laser scanner, and a detector. The laser rangefinder/LIDAR unit is used to operate in either a consecutive (e.g., using heterodyne detection) or inconsecutive detection mode. The camera may comprise an apparatus for capturing a plurality of images of the environment in which the vehicle 100 is located. The camera may be a still image camera or a dynamic video camera.

The control system 146 is configured for controlling the operation of the vehicle 100 and components (or units) thereof. Accordingly, the control system 146 may comprise various units, such as a steering unit, a power control unit, a brake unit, and a navigation unit.

The steering unit may be a combination of machines that adjust the heading of the vehicle 100. The power control unit (which may be, e.g., an accelerator) may be, for example, used to control the operating speed of the engine and thereby the speed of the vehicle 100. The brake unit may comprise a combination of machines for decelerating the vehicle 100. The brake unit may use friction to decelerate the vehicle in a standard manner. In other embodiments, the brake unit may convert kinetic energy of the wheel into electric current. The brake unit may be in other forms as well. The navigation unit may be any system that determines a driving path or route for the vehicle 100. The navigation unit may also dynamically update the driving path as the vehicle 100 proceeds. The control system 146 may additionally or optionally comprise other components (or units) not shown or described.

The user interface system 148 can be configured to allow the interaction between the vehicle 100 and external sensors, other vehicles, other computer systems, and/or users of the vehicle 100. For example, the user interface system 148 may comprise a standard visual display apparatus (e.g., a plasma display, a Liquid Crystal Display (LCD), a touch screen display, a head-mounted display, or other similar displays), a speaker or other audio output apparatuses, a microphone, or other audio input apparatuses. For example, the user interface system 148 may also comprise a navigation interface and an interface to control the internal environment (e.g., temperature or fans) of the vehicle 100.

The communication system 152 may provide the vehicle 100 with a way to communicate with one or more devices or other vehicles in the vicinity. In one exemplary embodiment, the communication system 152 may communicate with one or more devices directly or through a communication network. The communication system 152 may be, for example, a wireless communication system. For example, the communication system may use 3G cellular communication (e.g., CDMA, EVDO or GSM/GPRS) or 4G cellular communication (e.g., WiMAX or LTE), and may also use 5G cellular communication. Optionally, the communication system may communicate with a Wireless Local Area Network (WLAN) (e.g., using WIFI^{®}). In some embodiments, the communication system 152 may communicate directly with one or more devices or other vehicles around, for example, using infrared, Bluetooth^{®} or ZIGBEE. Other wireless protocols, such as various in-vehicle communication systems, are also within the scope of the present application. For example, the communication systems may include one or more Dedicated Short Range Communication (DSRC) apparatuses, V2V apparatuses or V2X apparatuses that may be in data communication publicly or privately with vehicles and/or roadside stations.

The computing system 150 can control some or all of the functions of the vehicle 100. An autonomous driving control unit of the computing system 150 can be configured to identify, evaluate and avoid or eliminate potential obstacles in the environment in which the vehicle 100 is located. In general, the autonomous driving control unit can be configured to control the vehicle 100 in the absence of a driver or to provide assistance to the driver in controlling the vehicle. In some embodiments, the autonomous driving control unit is configured to combine data from a GPS transceiver, a radar, a LIDAR, a camera and other vehicle systems to determine a travel path or trajectory of the vehicle 100. The autonomous driving control unit can be activated to enable the vehicle 100 to be driven in an autonomous driving mode.

The computing system 150 may comprise at least one processor (which may comprise at least one microprocessor) that executes processing instructions (i.e., machine-executable instructions) stored in a non-volatile computer readable medium (e.g., a data storage apparatus or a memory). The computing system 150 may also be a plurality of computing apparatuses that distributively control components or systems of the vehicle 100. In some embodiments, the memory may contain processing instructions that are executed by the processor to implement various functions of the vehicle 100 (e.g., program logic). In an embodiment, the computing system 150 can be in data communication with the driving system 142, the sensor system 144, the control system 146, the user interface system 148, and/or the communication system 152. The interfaces of the computing system are configured to facilitate data communication between the computing system 150 and the driving system 142, the sensor system 144, the control system 146, the user interface system 148, and the communication system 152.

The memory may also comprise other instructions, including instructions for data transmission, data reception, interaction, or control of the driving system 142, the sensor system 144, the control system 146 or the user interface system 148.

In addition to storing processing instructions, the memory may store a variety of information or data, such as image processing parameters, road maps and path information. These information may be used by the vehicle 100 and the computing system 150 during operation of the vehicle 100 in an autonomous mode, a semi-autonomous mode and/or a manual mode.

Although the autonomous driving control unit is shown as separated from the processor and the memory, it should be understood that, in some embodiments, some or all of the functions of the autonomous driving control unit can be implemented using program code instructions residing in one or more processors (or data storage apparatuses) and can be executed by the one or more processors, and that the autonomous driving control unit can be implemented using the same processor and/or memory (or data storage apparatuses) in some cases. In some embodiments, the autonomous driving control unit may be implemented, at least in part, using various application-specific circuit logics, various processors, various Field Programmable Gate Arrays ("FPGAs"), various Application-Specific Integrated Circuits ("ASICs"), various real-time controllers and hardware.

The computing system 150 may control functions of the vehicle 100 based on inputs received from various vehicle systems (e.g., the driving system 142, the sensor system 144 and the control system 146) or inputs received from the user interface system 148. For example, the computing system 150 may use inputs from the control system 146 to control the steering unit to avoid obstacles detected by the sensor system 144. In one embodiment, the computing system 150 may be configured to control various aspects of the vehicle 100 and systems thereof.

Although various components (or units) integrated into the vehicle 100 are shown in FIG. 1, one or more of the components (or units) may be mounted on the vehicle 100 or separately associated with the vehicle 100. For example, the computing system may exist partially or wholly independent of the vehicle 100. Thus, the vehicle 100 can exist in the form of separated or integrated device units. The device units constituting the vehicle 100 can communicate with each other in wired or wireless communication. In some embodiments, additional components or units may be added to various systems, or one or more components or units above (e.g., the LIDAR or radar as shown in FIG. 1) may be removed from the systems.

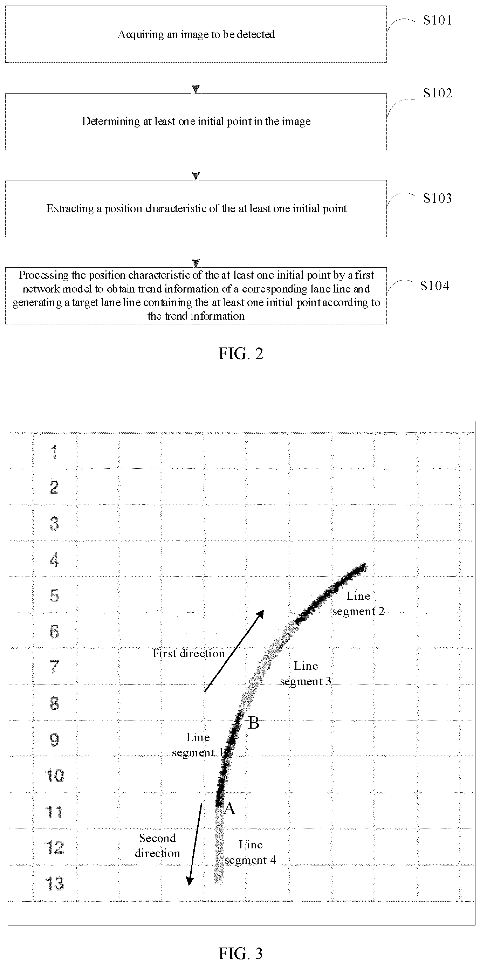

After the vehicle architecture related to the present application has been introduced, the method for detecting lane lines provided in one embodiment of the present application will be described below with reference to FIG. 2.

At step S101, an image to be detected is acquired.

A road image in a driving process of the vehicle may be acquired in real time through a camera mounted on the vehicle, so as to acquire the image to be detected.

At step S 102, a set of initial points in the image are determined, the set of initial points being on a lane line of the image. The set of initial points comprises at least one initial point, and the initial point is a point on an initial lane line of the image or on an extension line of an initial lane line; or to say, the initial point is located on an initial lane line of the image or on an extension line of an initial lane line.

After the image to be detected is acquired, the image is processed to determine the set of initial points located on the lane line in the image. Points in the set of initial points are all located along the whole line of the lane line in the image. Assuming that a lane line shown in the image is a Line AB, AB is extended to a critical line of the image according to a trend of AB to obtain a complete Line CD, and any one or more points in the Line CD may be taken as the points in the set of initial points. One of the purposes of the present application is to randomly determine some sets of initial points and generate, on the basis of these sets of initial points, a complete lane line containing these sets of points. For example, any one and more points in the Line CD are selected to generate the complete lane line CD.

There may be various methods for determining the set of initial points located on the lane line in the image. The present application does not limit a specific implementation, as long as it can be ensured that the points in the determined set of initial points are all located along the line where the lane line in the image is located. For example, lane line pixel points (i.e., pixel points in the lane line) in the image may be identified, and some initial points are determined from these lane line pixel points to form the set of initial points. A semantic segmentation method can be applied for the identification of the lane line pixel points. For example, whether each pixel point is a lane line pixel point is identified according to a semantic segmentation model, and one or more initial points are selected from the pixel points belonging to the lane line to form a set of initial points. It is also possible to directly identify an initial lane line in the image by a semantic segmentation model and select the set of initial points from the initial lane line. Alternatively, the set of initial points are determined by an image processing method. For example, lane lines are detected by a specific image edge detection or line detection method on the basis of the image characteristic of the lane lines, and points are extracted from these lines as the initial points.

In addition, the set of initial points may also be determined by an enumeration method. For example, some sets of pixel points in the image are randomly selected as candidate sets of points. For each selected point/candidate point, a position characteristic of the point (including a position coordinate and offset characteristic of the point) is input into a pre-trained trend prediction model, that is, a first network model to be described hereinafter. If a prediction result indicates that the next point is still in the current pixel or current square (for the latter, during the lane line detection, the image may be divided into image squares of m^{∗}n, such as m rows and n columns, or m columns and n rows, where n and m are both positive integers; for example, an image of 576×1024 pixels is divided into 72×128 squares, and a specific division number is not limited thereto), this point is not considered as an initial point; otherwise, if prediction can be continued, this point is considered as an initial point. It should be understood that if it is found that these candidate points are not the initial points after prediction is performed for all the points in the set of candidate points, it represents that there is no lane line in the current frame of image, and thus the step of completing the lane line of the current image can be skipped, and prediction for a next image is performed.

The set of initial points comprise at least one point. Further, the set of initial points comprise a plurality of points, the plurality of points may be located on the same lane line, or the plurality of points may be distributed on a plurality of lane lines. The set of initial points may comprise points located on a plurality of lane lines. For the same lane line, the points may be distributed continuously or discretely on the lane line.

Since each lane line is represented by points longitudinally spaced apart from each other by a predetermined distance, an initial lane line may be represented by the determined set of initial points when the set of initial points comprise a plurality of points, and accordingly, step S102 may comprise: processing the image to obtain an initial lane line in the image. The image can be processed by using a pre-trained semantic segmentation model to obtain the initial lane line in the image.

When the semantic segmentation model is trained, an initial semantic segmentation model may be trained with training images to obtain a trained model. The training image comprises marks indicating whether each pixel point or a square where each pixel point is located belongs to the lane line. It should be noted that a blank region between any two adjacent dashed line segments in the training image is marked as a lane line, so that the initial lane line obtained by the semantic segmentation model comprises a blank region between any two adjacent dashed line segments in a dashed lane line.

During data marking, if a blank region between dashed lane lines is directly marked as a lane line, the blank region between the dashed lane lines is also predicted as a lane line pixel point during model prediction. In the present application, the semantic segmentation model is used for prediction to accurately connect the dashed lane lines, which features both high efficiency and high accuracy. If a blank region between dashed lane lines is not marked as a lane line, a lane line completion method is required to complete the blank region between the dashed lane lines after the dashed lane lines are generated, which greatly increases the computing difficulty and reduces the accuracy of lane line completion.

In addition, during marking of the lane lines, a position attribute of each lane line in the image may also be marked. For example, the lane line is a left lane line, a middle lane line or a right lane line, or the lane line is a 1^{st} lane line, a 2^{nd} lane line, ..., an n^{th} lane line; or the lane line is a left 1 lane line, a left 2 lane line, a right 1 lane line, a right 2 lane line, and the like. A specific marking mode can be set by one skilled in the art as needed, which is not limited in the present application. Therefore, during the prediction of the initial lane line, the position attribute of each lane line can be obtained, so that the lane lines with the same position attribute can be easily connected for completion in the following process, and determining and checking of lane line connection results can also be performed. The specific training process is well known to those skilled in the art and will not be described herein.

At step S103, a position characteristic of at least one point in the set of initial points is extracted.

After a set of initial points located on the lane line in the image are obtained, a position characteristic of at least one point in the set of initial points is extracted, so that the extracted position characteristic of the at least one point is processed by using the pre-trained first network model in the following process to obtain trend information of a corresponding lane line.

If the set of initial points comprise points on a plurality of lane lines, during the subsequent lane line prediction, the plurality of lane lines can be predicted simultaneously in parallel (for example, the position characteristic of at least one point is extracted from the set of initial points on each lane line simultaneously), or the plurality of lane lines can be predicted in a serial manner (for example, the position characteristic of at least one point is extracted from the set of initial points located on a certain lane line for prediction, and after a complete lane line is generated, the position characteristic of at least one point is extracted from the set of initial points located on the next lane line for prediction, and so on).

In addition, since each lane line is represented by points longitudinally spaced apart from each other by a predetermined distance, an initial lane line may be represented by the determined set of initial points when the set of initial points comprise a plurality of points, and accordingly, this step may also be understood as: extracting a position characteristic of at least one point from an initial lane line. It is further understood as: identifying an initial lane line in the image, determining a set of initial points from the initial lane line, and extracting a position characteristic of at least one point in the set of initial points.

If the initial lane line itself is a complete lane line (for example, a lane line that reaches four critical lines of the image), no completion is needed. Therefore, in order to save time cost, after the initial lane line is obtained, a lane line to be completed (i.e., a to-be-completed lane line) can be identified from the initial lane line, and then a position characteristic of at least one point is extracted from the lane line to be completed. A lane line to be completed may be identified by determining whether an initial lane line reaches critical lines of the image. A lane line may be considered as a complete lane line if an initial lane line reaches the upper and lower critical lines of the image at the same time, or the initial lane line reaches the upper and left critical lines of the image at the same time, and no completion is needed. If one end of the initial lane line does not reach the critical line of the image, the initial lane line may be considered as a lane line to be completed. At this time, the set of initial points may comprise two endpoints of the initial lane line or the lane line to be completed, but are not limited thereto.

Considering that each initial lane line or lane line to be completed may have a plurality of points at the same height, a thick lane line may be changed into a thin lane line after the initial lane line or lane line to be completed is obtained in the present application; that is, the points at the same height in the lane line are deleted. For example, only the points on the same axis of the lane line are retained, such as the points on a center line of the lane line. In addition, coordinates of a plurality of points at the same height may be averaged to be coordinates of a new point, and the new point may replace the plurality of points at this same height. Of course, the present application is not limited to a specific implementation, and all methods capable of changing a thick lane line into a thin line fall within the protection scope of the present application. After the change, processing may be performed according to a midpoint of the thin line, such as determining a set of initial points, extracting a characteristic of at least one point, and correcting, on the basis of coordinates of the midpoint of the thin line, coordinates after model prediction. If there are a plurality of lane lines to be completed, a lane line to be completed having the longest distance may be selected first, and a position characteristic of at least one point in this lane line to be completed is extracted, so as to start the completion from the lane line to be completed having the longest distance. Optionally, after a complete lane line where the lane line to be completed having the longest distance is located is generated, a lane line having the longest distance is extracted from the remaining to-be-completed lane lines for completion, so that the accuracy of prediction can be improved.

The lane line to be completed is a lane line whose two endpoints haven't reached the critical lines of the image. As long as one endpoint does not reach the critical line of the image, a lane line is the lane line to be completed. A target lane line, i.e., the complete lane line, includes lane lines with two endpoints of the line segment reaching the critical lines of the image, respectively. The critical lines of the image comprise at least one of an upper critical line, a lower critical line, a left critical line, and a right critical line. The upper critical line is spaced apart from an upper edge of the image by a first predetermined distance, the lower critical line is spaced apart from a lower edge of the image by a second predetermined distance, the left critical line is spaced apart from an upper edge of the image by a third predetermined distance, the right critical line is spaced apart from a right edge of the image by the second predetermined distance, and so on. The four predetermined distances may be the same or different values, and may be set by those skilled in the art according to experience as needed, which is not limited in the present application. Further, considering that the upper part of the image is generally sky or ocean, the first predetermined distance may be a length of sky or ocean in the image, and thus the upper critical line may be considered as a lower edge line of the sky or ocean in the image. Of course, the four predetermined distances may be all 0. For example, the lower, left and right critical lines are the lower, left and right edges of the image, respectively. The position characteristic of each point comprises position coordinates and offset characteristic of the point, wherein the offset characteristic is a high-dimensional vector representing a position relation from the point to a next point. The offset characteristic of each point may be extracted from an intermediate layer of a pre-trained second network model according to the position coordinates of each point. The second network model may be a semantic segmentation model, or a neural network model specifically used for extracting the offset characteristic.

The second network model is a pre-trained network model, and its training process may comprise: acquiring a second training set, the second training set comprising a plurality of marked training images; and training an initial second network model by using the second training set to obtain a trained model, namely the second network model. It should be noted that the training images in the second training set are marked with a plurality of lane lines and coordinate offsets from each point to a next point in each lane line. The specific training process is well known to those skilled in the art and will not be described in detail herein.

In an embodiment of the present application, the trained second network model for extracting the offset characteristic representing the position relation from a point to a next point is used to extract the offset characteristic of each point, so as to improve the precision of detection.

At step S104, the position characteristics of the at least one point is processed by using a pre-trained first network model to obtain trend information of a corresponding lane line, and a target lane line containing the set of initial points is generated according to the trend information.

After the position characteristic of at least one point is extracted, the position characteristic of the at least one point is processed by using the pre-trained first network model to obtain the trend information of a corresponding lane line, and the target lane line containing the set of initial points is generated according to the trend information. There may be one or more target lane lines, the set of initial points are distributed on these target lane lines, and each target lane line is a complete lane line or a lane line that is predicted to reach a preset stop position. That is, in the present application, after a road image is acquired, a lane line of the image itself is not completely displayed due to various conditions such as stain and abrasion, shadow coverage, pixel blurring or shielding by an object. By using the method for detecting lane lines of the present application, a complete lane line that directly reaches the edge of the image (i.e., the endpoint of the lane line is at the critical line of the image) is generally displayed at last, and the precision of identification of lane lines is improved. On the basis of distances between these lane lines and the road boundary lines, positioning can be performed more accurately.

When the first network model processes the position characteristic of each point, an input of the first network model comprises the position coordinates and the offset characteristic of the current point and trend information learned last time by the first network model, and an output of the first network model comprises the coordinate offset from the current point to the next point and trend information learned this time. The trend information comprises a high-dimensional vector, and the trend information input into the first network model in a first prediction is a preset initial value. In an embodiment of the present application, in addition to the position coordinates and the offset characteristic of the current point, the trend information learned by the model last time is also input into the network model. The model continuously learns the trend information between all the points, so that the lane line can be quickly and accurately completed to obtain the complete lane line.

That is to say, processing the position characteristic of the at least one initial point by the first network model to obtain the trend information of the corresponding lane line comprising: performing, by the first network model, prediction for a plurality of times. An input of the first network model for prediction for each time other than a first time comprises the position coordinates and offset characteristic of a point learned last time and trend information learned last time by the first network model. An output of the first network model for prediction for each time comprises position coordinates of a point learned this time and trend information learned this time. An input of the first network model for prediction for the first time comprises the position coordinates and offset characteristic of the at least one initial point. The points of the target lane line further comprise the point learned each time of prediction by the first network model.

In one embodiment, the process of step S104 may comprise: processing, by using the first network model, the position coordinates and offset characteristic of the current point and the trend information learned last time by the first network model, and outputting a coordinate offset from the current point to a next point and trend information learned this time; determining position coordinates of the next point according to the coordinate offset and the position coordinates of the current point; outputting offset coordinates from the next point to a further next point and latest trend information by taking the offset characteristic and position coordinates of the next point and the trend information learned this time by the first network model as model input, and so on, till a preset stop position is reached, that is, a point at the preset position ( or a preset stop point at a the preset position) is predicted by the first model. For example, if the position coordinate of a current point and the offset coordinates outputted by the model indicate the next point is at a preset stop position (e.g., the critical line of the image), or if the number of inference iterations is equal to a predetermined number, it means the next point is at the preset stop position, and the preset stop position is reached.

To facilitate understanding, an example is provided as follows: during the first prediction, the position coordinates and offset characteristic of a first point, namely a starting point, and a preset initial value of trend information are input into the first network model, and the coordinate offset from the current point, namely the starting point, to a next point and trend information learned this time are output; during the second prediction, the position coordinates of the next point, namely a second point, are obtained according to the coordinate offset obtained at the first prediction and the position coordinates of the first point; the position coordinates and offset characteristic of the next point, namely the second point, and the trend information learned this time are input into the first network model, and the offset coordinates from the next point, namely the second point, to a further next point, namely a third point, and latest trend information are output; during the third prediction, the position coordinates of the second point is obtained according to the coordinate offset obtained in the second prediction and the position coordinates of the second point; the position coordinates and offset characteristic of the third point and the trend information learned at the second time are input into the first network model, and the offset coordinates from the third point to a fourth point and latest trend information are output; and so on; till a preset stop position is reached. It should be noted that the offset characteristic of each point may be extracted from an intermediate layer of a pre-trained second network model according to the position coordinates of each point.

The process of determining that the predetermined stop position is reached comprises: determining that the preset stop position is reached in response to iteration is performed for a predetermined number of times, such as 100 iterations, or the lane line to be completed reaches the critical line of the image. The iteration times being equal to a predetermined number means there are the predetermined number of points having been predicted by the model.

In one embodiment, the process of determining position coordinates of a next point according to a coordinate offset and position coordinates of a current point may comprise: correcting the position coordinates of the next point in response to the next point being at a same height as a certain point in the set of initial points at the same height as the next point and a horizontal distance between the next point and the certain point that is at the same height as the next point being less than or equal to a predetermined pixel (such as 1 pixel point). By correcting the position coordinates of the next point, errors can be reduced, and thus the accuracy of detection is improved.

Further, if the initial lane line has been identified, when the trend information of the lane line is predicted on the basis of the points in the initial lane line, the process of determining the position coordinates of the next point according to the coordinate offset and the position coordinates of the current point may comprise: correcting the position coordinates of the next point on the basis of a point on the initial lane line that is at the same height as the next point in response to a horizontal distance between the position coordinates of the next point and the initial lane line being less than or equal to a predetermined pixel (such as 1 pixel point). Further, if the lane line to be completed is identified from the initial lane line, when the trend information of the lane line is predicted on the basis of the points in the lane line to be completed, the process of determining the position coordinates of the next point according to the coordinate offset and the position coordinates of the current point may comprise: correcting the position coordinates of the next point on the basis of a point on the lane line to be completed that is at the same height as the next point if a horizontal distance between the position coordinates of the next point and the lane line to be completed is less than or equal to a predetermined pixel (such as 1 pixel point).

In one embodiment, the image may be divided into image squares of m^{∗}n. At this time, the coordinate offset from the current point to the next point comprises a coordinate offset from a center point of the square in which the current point is located to a midpoint of the lane line in a square of a next row. By means of dividing the image into the image squares of m*n, the position coordinates of each point and the coordinate offset from each point to a next point can be determined more quickly.

In one optional embodiment, the position coordinates input into the first network model are normalized coordinates, which can reduce the prediction error. Of course, the position coordinates of the first network model may be normalized on the basis of other upper and lower limit values, and those skilled in the art may set the maximum value for the normalization as needed, which is not limited in the present application.

In one embodiment, in order to improve the accuracy of prediction for the lane lines, the process of step S104 may comprise: processing a position characteristic of at least one point by using a pre-trained first network model to obtain trend information of a corresponding lane line along a first direction, and generating, according to the trend information along the first direction, a plurality of points till a preset stop position in the first direction is reached; and from the preset stop position in the first direction, predicting trend information of the corresponding lane line along a second direction by using the first network model, and generating, according to the trend information along the second direction, a plurality of points till a preset stop position in the second direction is reached. In this embodiment, the position characteristic of at least one point along the first direction is processed to obtain the trend information of the corresponding lane line along the first direction, and the plurality of points are generated according to the trend information along the first direction till the preset stop position in the first direction is reached; and the trend information of the lane line along the second direction is predicted along an opposite direction, and the plurality of points are generated according to the trend information along the second direction till the preset stop position in the second direction is reached. By predicting the same lane line in both forward and backward directions, more characteristic points are input into the first network model, so that the model can learn more accurate trend information, and the accuracy of detection can be improved.

The process of predicting the trend information of the lane line in each direction is the same as the process described above. For example, the position coordinates and offset characteristic of the current point and the trend information learned last time by the first network model are processed by using the first network model, and the coordinate offset from the current point to the next point and the trend information learned this time are output; the position coordinates of the next point are determined according to the coordinate offset and the position coordinates of the current point; the offset coordinates from the next point to a further next point and latest trend information are output by taking the offset characteristic and position coordinates of the next point and the trend information learned this time by the first network model as model input; and so on, till the preset stop position is reached.

To facilitate understanding, the schematic diagram shown in FIG. 3 is taken as an example for explanation. Assuming that the set of initial points are located at Line segment 1 in the figure, the trend of the lane line may be predicted in any one of the first direction or the second direction in the figure. For example, the trend of the lane line in the first direction is predicted, and a plurality of points are generated according to the trend information along the first direction till the preset stop position in the first direction is reached; and then the trend information of the lane line in the opposite direction, namely the second direction, is predicted, and a plurality of points are generated according to the trend information along the second direction till the preset stop position in the second direction is reached. It should be noted that the first direction and the second direction in FIG. 3 can be interchanged; that is, an upward direction may be the second direction, and a downward direction may be the first direction.

In one optional embodiment, the process of processing the position characteristic of the at least one point by using a pre-trained first network model to obtain trend information of the corresponding lane line may comprise: processing the position characteristic of at least one point of the set of initial points in the first direction by using the pre-trained first network model to obtain trend information of a corresponding lane line along the first direction; and processing the position characteristic of at least one point of the set of initial points in the second direction by using the pre-trained first network model to obtain trend information of the corresponding lane line along the second direction. The position characteristic of at least one point is processed along two different directions simultaneously to obtain the trend information of a corresponding lane line along the 2 directions, so that the lane line can be completed.

To facilitate understanding, the schematic diagram shown in FIG. 3 is taken as an example for explanation. Assuming that the set of initial points are located at Line segment 1 in the figure, the same lane line can be predicted in both the first direction and the second direction in the figure. For example, starting from point A, the trend of the lane line in the first direction is predicted along the first direction; and starting from point B, the trend of the lane line in the second direction is predicted along the second direction, so that more initial points can be input, and the accuracy of prediction is improved.

If the set of initial points comprise a plurality of points, the set of initial points may be represented as an initial lane line; if the initial lane line is a lane line to be completed, correspondingly, the process of processing the position characteristic of at least one point by using a pre-trained first network model to obtain trend information of a corresponding lane line may comprise: processing the position characteristics of a plurality of points of the lane line to be completed in the first direction by using the pre-trained first network model to obtain the trend information of the lane line to be completed along the first direction; and processing the position characteristics of a plurality of points of the lane line to be completed in the second direction by using the pre-trained first network model to obtain the trend information of the lane line to be completed along the second direction, wherein the plurality of points of the lane line to be completed in the first direction and the plurality of points in the second direction share a common point.

In addition, if there are a plurality of lane lines to be completed, the lane line to be completed having the longest distance can be selected for lane line completion. After the lane line to be completed having the longest distance is completed, a lane line is selected from the remaining to-be-completed lane lines for completion. After being completed in the first direction to the preset stop position, the lane line is completed from the preset stop position along the second direction to the preset stop position in the second direction; alternatively, the lane line to be completed having the longest distance may be completed simultaneously in the first direction and the second direction.

For example, the position characteristic of the at least one point extracted from the lane line to be completed having the longest distance comprises a first position characteristic of a first endpoint and a second position characteristic of a second endpoint. The process of performing lane line completion on the lane line to be completed having the longest distance simultaneously in the first direction and the second direction may comprise: processing the first position characteristic by using the pre-trained first network model, and predicting the trend information of the lane line to be completed in a direction from the first endpoint to the second endpoint; and processing the second position characteristic by using the pre-trained first network model, and predicting the trend information of the lane line to be completed in a direction from the second endpoint to the first endpoint.

The schematic diagram shown in FIG. 3 is used as an example for explanation. Assuming that the initial lane line comprises two parts, namely, Line segment 1 and Line segment 2 in the figure, Line segment 1 may be selected for lane line completion as Line segment 1 and Line segment 2 are both lane lines to be completed, and Line segment 1 is longer than Line segment 2. For example, a plurality of points are generated along the first direction to obtain Line segment 3, and a plurality of points are generated along the second direction to obtain Line segment 4, thereby completing the lane line. In one embodiment, the first network model comprises a first network branch and a second network branch. The first network branch is used for predicting trend information of the corresponding lane line from a first direction, and the second network branch is used for predicting trend information of the corresponding lane line from a second direction, wherein the first direction is opposite to the second direction. In this embodiment, when the trend information of the lane line along the first direction is predicted, the first network branch is used for prediction. When the trend information of the lane line along the second direction is predicted, the second network branch is used for prediction. By predicting trend information of different directions through different network branches, the accuracy of lane line detection can be improved, and meanwhile the speed of obtaining the complete lane line can be improved since the lane line is allowed to be completed from different directions by using two network branches. The first network model is a pre-trained trend prediction model and is mainly used for predicting the trend information of lane lines. It may be a recurrent neural network model, such as a recurrent neural network model in which parameters are shared at each step. By normalizing the position coordinates, the situation that the training precision is affected due to a too large difference in data magnitudes involved in calculation is avoided. The recurrent neural network model may be a Long Short-Term Memory (LSTM) network model or a Gate Recurrent Unit (GRU) network model.

The training process of the first network model may comprise: acquiring a coordinate sequence of a plurality of lane lines; extracting coordinate offsets and offset characteristics from each point to a next point in each lane line to generate a first training set; and training an initial first network model by using the first training set to obtain a trained model. The initial first network model is trained by using the coordinate offsets and the offset characteristics from each point to the next point in each lane line that are extracted, so that the first network model learns the position relations from each point to the next point in the lane line and further learns the trend information of the lane line, and thus the lane line can be quickly detected on the basis of the network model in the following process. The specific training process is well known to those skilled in the art and will not be described in detail herein.

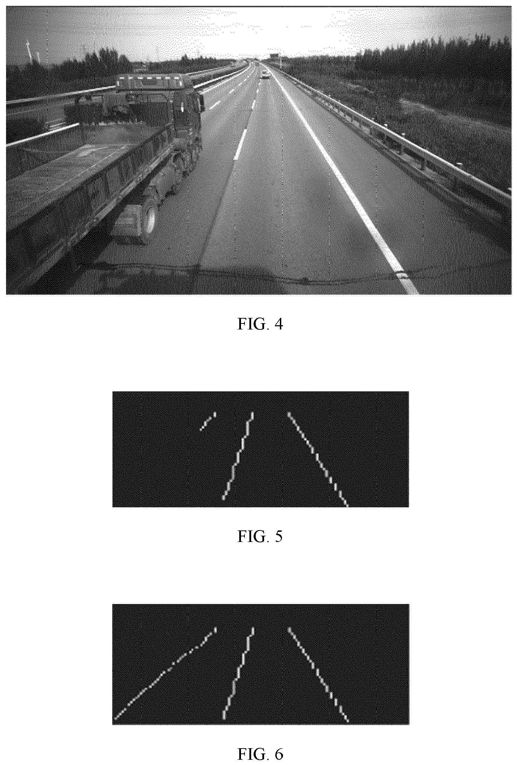

In order to understand the scheme as a whole, an example for detecting a lane line by using the method for detecting a lane line shown in the embodiment of the present application will be described below with reference to the schematic diagrams shown in FIGs. 4 to 6.

FIG. 4 is a schematic diagram of a road image of the present application, and an initial lane line identified from this image is as shown in FIG. 5. The leftmost lane line is covered by a vehicle, so that the initially displayed lane line is only an uncovered part. A dashed lane line is in the middle, and it reaches the upper critical line of the image but does not reach the lower critical line, so that it needs to be completed. In addition, the blank regions between the dashed line blocks are also identified as initial lane lines, thereby improving the efficiency of lane line completion in the following process. The right side is a solid lane line which reaches the upper and lower critical lines of the image, so that it is a complete lane line and does not need to be completed. After the lane line shown in FIG. 5 is completed by applying the method for detecting lane lines shown in the embodiment of the present application, a result shown in FIG. 6 is obtained, wherein each lane line is represented as a complete lane line, such that the user experience is improved, and performing algorithms for such subsequent procedures as vehicle positioning according to these complete lane lines is facilitated.

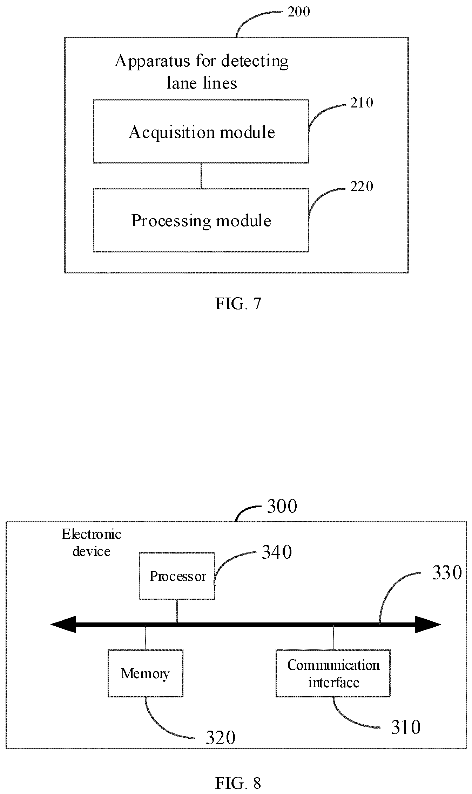

Based on the same inventive concept, an embodiment of the present application further provides an apparatus 200 for detecting lane lines, as shown in FIG. 7. The apparatus 200 for detecting lane lines comprises an acquisition module 210 and a processing module 220.

The acquisition module 210 is configured to acquire an image comprising lane lines.

The processing module 220 is configured to: determine a set of initial points in the image, the set of initial points being on a lane line of the image; extract a position characteristic of at least one point in the set of initial points; process the position characteristic of the at least one point by using a pre-trained first network model to obtain trend information of a corresponding lane line; and generate a target lane line containing the set of initial points according to the trend information. The target lane line comprises lane lines whose two endpoints reach the critical lines of the image.

Each lane line is represented by points longitudinally spaced apart from each other by a predetermined distance, and the position characteristic of each point comprises position coordinates and an offset characteristic of the point, wherein the offset characteristic is a high-dimensional vector representing a position relation from the point to a next point, and is extracted from an intermediate layer of a pre-trained second network model according to the position coordinates of each point.

In response to the set of initial points comprising a plurality of points, the plurality of points are located on the same lane line, or the plurality of points are distributed on a plurality of lane lines.

When the first network model processes the position characteristic of each point, an input of the first network model is the position coordinates and the offset characteristic of the current point and trend information learned last time by the first network model, and an output of the first network model is the coordinate offset from the current point to the next point and trend information learned this time.

The trend information is a high-dimensional vector, and the trend information input into the first network model during a first prediction is a preset initial value.

In one embodiment, the processing module 220 is specifically configured to: process, by using the first network model, the position coordinates and offset characteristic of the current point and the trend information learned last time by the first network model, and output a coordinate offset from the current point to a next point and trend information learned this time; determine position coordinates of the next point according to the coordinate offset and the position coordinates of the current point; output offset coordinates from the next point to a further next point and latest trend information by taking the offset characteristic and position coordinates of the next point and the trend information learned this time by the first network model as model input, and so on, till a preset stop position is reached. The preset stop position comprises a position where a preset number of iterations are achieved, or a position at critical lines of the image. The critical lines of the image comprise at least one of an upper critical line, a lower critical line, a left critical line, and a right critical line.

In one embodiment, the processing module 220 is specifically configured to: correct the position coordinates of the next point in response to the next point being at a same height as a certain point in the set of initial points and a horizontal distance between the next point and the certain point that is at the same height as the next point being less than or equal to a predetermined pixel.

In one embodiment, the first network model is a recurrent neural network model in which parameters are shared at each step, and the position coordinates input into the first network model are normalized coordinates.

In one embodiment, the image is divided into image squares of m^{∗}n, and the coordinate offset from the current point to the next point is a coordinate offset from a center point of the square in which the current point is located to a midpoint of the lane line in a square of a next row.

In one embodiment, the first network model comprises a first network branch and a second network branch; the first network branch is used for predicting trend information of a corresponding lane line from a first direction, and the second network branch is used for predicting trend information of the corresponding lane line from a second direction, wherein the first direction is opposite to the second direction.

In one embodiment, the processing module 220 is specifically configured to: process a position characteristic of at least one point by using a pre-trained first network model to obtain trend information of a corresponding lane line along a first direction, and generate, according to the trend information along the first direction, a plurality of points till a preset stop position in the first direction is reached; and from the preset stop position in the first direction, predict trend information of the corresponding lane line along a second direction by using the first network model, and generate, according to the trend information along the second direction, a plurality of points till a preset stop position in the second direction is reached, wherein the first direction is opposite to the second direction.

In one embodiment, the processing module 220 is specifically configured to: process a position characteristic of at least one point of the set of initial points in a first direction by using a pre-trained first network model to obtain trend information of a corresponding lane line along the first direction; and process the position characteristic of at least one point of the set of initial points in a second direction by using a pre-trained second network model to obtain trend information of the corresponding lane line along the second direction, wherein the first direction is opposite to the second direction.

Optionally, the acquisition module 210 is further configured to acquire a coordinate sequence of a plurality of lane lines; and the processing module 220 is further configured to: extract coordinate offsets and offset characteristics from each point to a next point in each lane line to generate a first training set, and train an initial first network model by using the first training set to obtain a trained model.

Optionally, the acquisition module 210 is further configured to acquire a second training set, wherein training images in the second training set are marked with a plurality of lane lines and coordinate offsets from each point to a next point in each lane line; the processing module 220 is further configured to train an initial second network model by using the second training set to obtain a trained model.

The implementation principle and the generated technical effects of the apparatus 200 for detecting lane lines provided in an embodiment of the present application are the same as those of the aforementioned method embodiments, and for brevity in description, reference can be made to the corresponding content in the aforementioned method embodiments for what is not mentioned in apparatus embodiments.

Based on the same inventive concept, as shown in FIG. 8, an embodiment of the present application further provides an electronic device 300 for implementing the above method for detecting lane lines. The electronic device 300 comprises a communication interface 310, a memory 320, a communication bus 330, and a processor 340.

The communication interface 310, the memory 320, and the processor 340 are electrically connected to each other directly or indirectly to achieve data transmission or interaction. For example, these elements can be electrically connected to each other via one or more communication buses 330 or signal lines. The communication interface 310 is configured to implement one or more communication protocols (LTE, Wi-Fi, etc.). The memory 320 is configured to store computer programs, e.g., a software functional module shown in FIG. 7, that is, the apparatus 200 for detecting lane lines, wherein the apparatus 200 for detecting lane lines comprises at least one software functional module that can be stored in the memory 320 in a form of a software or a firmware or can be cured in an operating system (OS) of the electronic device 300. The processor 340 is configured to execute an executable module stored in the memory 320, e.g., software functional modules and computer programs comprised in the apparatus 200 for detecting lane lines. For example, the processor 340 is configured to: acquire an image to be detected; determine a set of initial points in the image, the set of initial points being on a lane line of the image; extract a position characteristic of at least one point in the set of initial points; process the position characteristic of the at least one point by using a pre-trained first network model to obtain trend information of a corresponding lane line; and generate a target lane line containing the set of initial points according to the trend information.

The memory 320 can be, but is not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), and the like.

The processor 340 can be an integrated circuit chip having signal processing capability. The above-mentioned processor can be a general-purpose processor, including a Central Processing Unit (CPU), a Network Processor (NP), and the like, or can be a Digital Signal Processor (DSP), an Application Specific Integrated Circuit (ASIC), a Field Programmable Gate Array (FPGA) or other programmable logic devices, discrete gates or transistor logic devices and discrete hardware components. The various methods, steps and logic block diagrams disclosed in embodiments of the present application can be implemented or performed. The general-purpose processor can be a microprocessor or the processor 340 can be any conventional processor or the like.

The above-mentioned electronic device 300 includes, but is not limited to, a computer, a server, an on-board computer in a vehicle and the like.

An embodiment of the present application further provides a non-volatile computer readable storage medium (hereinafter referred to as a storage medium), wherein the storage medium has a computer program stored thereon, and the computer program performs the above-mentioned method for detecting lane lines when executed by a computer such as the above-mentioned electronic device 300.

It should be noted that, all embodiments of the present application are described in a progressive manner, each embodiment is highlighted in differences from other embodiments, and reference can be made to each other for the same and similar parts between the embodiments.

In the several embodiments provided in the present application, it should be understood that the disclosed apparatus and method can also be implemented in other manners. The apparatus embodiments described above are merely illustrative. For example, flowcharts and block diagrams in the drawings show systematic architectures, functions, and operations of the apparatus, the method and the computer program product possibly implemented according to a plurality of embodiments of the present application. In this regard, each block in the flowcharts or the block diagrams can represent a portion of a module, a program segment or codes, wherein the portion of the module, the program segment or the codes comprises one or more executable instructions for implementing specified logical functions. It should also be noted that, in some alternative implementations, the functions shown in the blocks may occur in an order different from the order shown in the drawings. For example, two consecutive blocks may, in fact, be executed substantially in parallel, and the two blocks may sometimes be executed in a reverse order, depending upon the functions involved. It should also be noted that each block of the block diagrams and/or the flowcharts and a combination of the blocks in the block diagrams and/or the flowcharts can be implemented through a dedicated hardware-based system that executes a specified function or operation, or can be implemented through a combination of a dedicated hardware and a computer instruction.

In addition, the functional modules in the embodiments of the present application can be integrated together to form an independent part, or each module can exist independently, or two or more modules can be integrated to form an independent part.

The function, if implemented in a form of a software functional module and sold or used as an independent product, can be stored in a computer readable storage medium. Based on such understanding, the technical scheme of the present application essentially can be, or part of the technical scheme contributing to the prior art can be, or part of the technical scheme can be embodied in a form of a software product. The computer software product is stored in a storage medium and comprises several instructions for enabling a computer device (which can be a personal computer, a notebook computer, a server, an electronic device, or the like) to implement all or part of the steps of the method described in the embodiments of the present application. The aforementioned storage medium includes a U-disk, a removable hard disk, a Read-Only Memory (ROM), a Random Access Memory (RAM), a magnetic disk, an optical disk, or other mediums capable of storing program codes.

What is mentioned above is only specific embodiments of the present application, but the protection scope of the present application is not limited thereto, and any person skilled in the art can easily recognize changes or substitutions within the technical scope disclosed in the present application, and these changes and substitutions shall fall within the protection scope of the present application. Therefore, the protection scope of the present application shall be subject to the protection scope of the claims.

## Claims

1. A method for detecting lane lines, comprising:
acquiring an image to be detected;
determining at least one initial point in the image;
extracting a position characteristic of the at least one initial point;
processing the position characteristic of the at least one initial point by a first network model to obtain trend information of a corresponding lane line; and
generating a target lane line containing the at least one initial point according to the trend information.

2. The method according to claim 1, wherein:
the target lane line is represented by a plurality of points comprising the at least one initial point, wherein position characteristic of each point of the target lane line comprises position coordinates and an offset characteristic of the point;
the offset characteristic of each point of the target lane line comprises a high-dimensional vector representing a position relation from the point to a next point, the high-dimensional vector being obtained by a second network model according to the position coordinates of the points of the target lane line.

3. The method according to claim 1 or 2, wherein:
processing the position characteristic of the at least one initial point by the first network model to obtain the trend information of the corresponding lane line comprising: performing, by the first network model, prediction for a plurality of times,
an input of the first network model for prediction for each time other than a first time comprises the position coordinates and offset characteristic of a point learned last time and trend information learned last time by the first network model;
an output of the first network model for prediction for each time comprises position coordinates of a point learned this time and trend information learned this time;
an input of the first network model for prediction for the first time comprises the position coordinates and offset characteristic of the at least one initial point; and
the points of the target lane line further comprise the point learned each time of prediction by the first network model.

4. The method according to any one of claims 1-3, wherein the trend information comprises a high-dimensional vector, and the trend information input into the first network model in a prediction for the first time is a preset initial value.

5. The method according to claim 2, wherein the processing the position characteristic of the at least one initial point by the first network model to obtain the trend information of the corresponding lane line comprises:
processing, by the first network model, the position coordinates, the offset characteristic of a current point and the trend information learned last time by the first network model;
outputting a coordinate offset from the current point to the next point and trend information learned this time;
determining position coordinates of the next point according to the coordinate offset and the position coordinates of the current point;
outputting offset coordinates from the next point to a further next point and latest trend information by taking the offset characteristic and the position coordinates of the next point and the trend information learned this time by the first network model as model input.

6. The method according to claim 5, wherein the determining position coordinates of the next point according to the coordinate offset and the position coordinates of the current point comprises:
correcting the position coordinates of the next point in response to the next point being at a same height as a certain initial point and a horizontal distance between the next point and the certain initial point that is at the same height as the next point being less than or equal to a predetermined pixel.

7. The method according to claim 5, wherein the image is divided into image squares of m rows and n columns, and the coordinate offset from the current point to the next point is a coordinate offset from a center point of a square in which the current point is located to a midpoint of the lane line in a next row.

8. The method according to any one of claims 1-7, wherein
the first network model comprises a first network branch and a second network branch;
the first network branch is used for predicting trend information of a corresponding lane line in a first direction;
the second network branch is used for predicting trend information of the corresponding lane line in a second direction;
wherein the first direction is opposite to the second direction.

9. The method according to any one of claims 1-7, wherein
the target lane line comprises a lane line whose two endpoints are at critical lines of the image respectively;
the critical lines of the image comprise at least one of an upper critical line, a lower critical line, a left critical line, or a right critical line.

10. The method according to any one of claims 1-9,
wherein the processing the position characteristic of the at least one initial point by the first network model to obtain trend information of the corresponding lane line comprises:
processing the position characteristic of the at least one initial point by the first network model to obtain trend information of a corresponding lane line along a first direction;
wherein generating the target lane line containing the at least one initial point according to the trend information comprises:
generating, according to the trend information along the first direction, a plurality of points till a preset stop position in the first direction is reached;
wherein the processing the position characteristic of the at least one initial point by the first network model to obtain trend information of the corresponding lane line further comprises:
from the preset stop position in the first direction, predicting the trend information of the corresponding lane line along a second direction by the first network model; and
wherein generating the target lane line containing the at least one initial point according to the trend information further comprises:
generating, according to the trend information along the second direction, a plurality of points till a preset stop position in the second direction is reached; wherein the first direction is opposite to the second direction.

11. The method according to any one of claims 1-9, wherein the processing the position characteristic of the at least one initial point by the first network model to obtain trend information of the corresponding lane line comprises:
processing the position characteristic of at least one initial point in a first direction by the first network model to obtain trend information of a corresponding lane line along the first direction; and
processing the position characteristic of at least one initial point in a second direction by using the first network model to obtain trend information of the corresponding lane line along the second direction, wherein the first direction is opposite to the second direction.

12. The method according to any one of claims 1-11, further comprising:
acquiring a coordinate sequence of a plurality of lane lines;
extracting coordinate offsets and offset characteristics from each point to a next point in each lane line to generate a first training set; and
training an initial network model by the first training set to obtain the first network model.

13. The method according to claim 12, further comprising:
acquiring a second training set, wherein training images in the second training set are marked with a plurality of lane lines and coordinate offsets from each point to a next point in each lane line; and
training a further initial network model by using the second training set to obtain the second network model.

14. An electronic device, comprising:
a memory and a processor, wherein
the memory is configured to store programs;
the processor, when executing the programs, implement a method according to any one of claims 1-13.

15. A storage medium, having a computer program stored thereon, wherein the computer program, when executed by a processor, performs a method according to any one of claims 1-13.
